# EUROPEAN PATENT APPLICATION

(11) **EP 1 002 772 A1**
(43) Date of publication of application: **24.05.2000**
(21) Application number: 98309483.0
(22) Date of filing: 19.11.1998
(51) Int. Cl.: C03B 37/04

(54) **Apparatus and method for forming mineral fibres**

(71) Applicant: Rockwool International A/S, DK-2640 Hedehusene (DK)
(72) Inventor: The designation of the inventor has not yet been filed
(74) Representative: Lawrence, Peter Robin Broughton

(57) **Abstract**

A spinning apparatus for forming mineral fibres comprises a substantially vertical shaft (1) mounted for rotation about its axis and a substantially horizontal disc (2) mounted at the base of the shaft (1) for rotation with the shaft, and the apparatus has an annular melt passage (3) which extends coaxially through the shaft (1) around a shaft coolant passage (8) into a disc melt passage (9) which extends from the annular melt passage (3) to a peripheral melt outlet slot (10), and there are fiberisation baffles (19) in the disc melt passage (9) in or adjacent top the outlet slot (10) and means (20, 21) for applying electrically conductive heating to the melt between the inner and outer opposed walls (4, 5) and between the upper and lower opposed walls (12, 11) of the melt passages (3) and (9).

## Description

This invention relates to apparatus and methods for forming mineral fibres by centrifugation of a mineral melt methods and apparatus of the general type which utilises a disc which spins about a substantially vertical axis.

Various methods are known for forming fibres by such a technique. They all involve the use of an apparatus comprising a substantially vertical shaft mounted for rotation about its axis and a substantially horizontal disc mounted at the base of the shaft for rotation with the shaft.

In one form of apparatus, melt is poured down on to the top of the disc and is thrown off the upper surface.

In another form of this apparatus the disc is in the form of a cup having perforated sides. The melt is poured down into the cup and is thrown out through the perforations by centrifugal force. Burners usually direct hot air into the cup in order to maintain the melt hot while it is in the cup. Often, burners direct hot air around the walls of the cup in order to heat the melt as it is being thrown through the perforations, thereby minimising the risk of solidification of the melt in the perforations.

Instead of using a hot air burner for maintaining the atmosphere hot around the perforations, in US 3,304,164 it is proposed to use induction heating by means of a high frequency current applied through a winding positioned radially beyond the sides of the cup.

Another fiberising method of the same general type is described in US 2,333,218 in which melt is fed from above or from below into a rotating melt passage that has an outlet at its outer periphery, and super-heated air is fed through a duct within the melt and is discharged from that duct with the melt, through the fiberising outlet thereby forcing the melt out of the fiberising outlet as fibres.

Out of all the various methods of this type which have been described, the one that has been most widely adopted is the spinning cup apparatus provided with perforations in the wall of the cup and gas or other burners for heating the melt in the cup and for providing heat around the cup.

This, like all centrifugal spinning methods, tends to suffer from the disadvantage that it is necessary to formulate the melt carefully so as to achieve the correct viscosity having regard to the temperatures which prevail at various points through the apparatus. On the one hand it is necessary that the melt should be sufficiently fluid both when it is fed into the apparatus initially and when it is being discharged centrifugally from the apparatus, but on the other hand the melt viscosity at the time of centrifugal fibre formation must not be too low as otherwise fibre properties will be inferior.

The same general problems apply with other centrifugal spinning systems and it will be desirable to provide a new type of centrifugal spinning apparatus.

A spinning apparatus according to the invention for forming mineral fibres comprises
a substantially vertical shaft mounted for rotation about its axis and a substantially horizontal disc mounted at the base of the shaft for rotation with the shaft, and is characterised in that
an annular melt passage defined by inner and outer opposed walls extends coaxially through the shaft around a shaft coolant passage into a disc melt passage which is defined by upper and lower opposed walls and which extends from the annular melt passage to a peripheral melt outlet slot in the disc, whereby melt fed down into the annular melt passage can be thrown centrifugally from the outlet slot,
fiberisation baffles in the disc melt passage in or adjacent to the outlet slot for promoting fiberisation of melt thrown from the outlet slot, and
means for applying electrical conductive heating to the melt between the inner and outer opposed walls and between the upper and lower opposed walls.

If the melt outlet slot is parallel sided and free of corrugations or other baffles around the entire periphery, the melt will tend to be thrown out from the slot as a sheet, with the result that good fiberisation of the sheet would require blasting large amounts of fiberising air into the sheet. Baffles are therefore located in the disc melt passage either in or adjacent to the outlet slot.

These baffles can be of any construction that promotes fiberisation of the melt which is being thrown centrifugally from the outlet. The baffles can consist of, for instance, a uniform or variable constriction in the depth of the disc melt passage at the outlet, or a series of ridges, usually a series of radially extending ridges, around the upper and/or lower walls which define the melt outlet slot.

Generally, however, the baffles comprise pins or plates which extend alternately from the upper and lower surfaces and thereby intermesh with each other but do not make electrical contact with each other. The pins or plates generally each extend to at least 25%, often 30 to 60%, but usually not more than 75%, of the depth of the outlet slot. Adjacent pins or plates are often spaced from one another by a distance which typically is 0.3 to 5 times, often around 0.5 to 2 times, the depth of the slot.

Pins may have a substantially circular or square cross section. Plates will have an elongated cross section. The plates may extend substantially radially, at an angle to the radial direction (over part or all of the length of the plates) or mainly peripherally.

The plates may be intended primarily to influence the angle of flow of the melt through the outlet without providing any significant obstruction to the melt. Such plates may be thin and so may have as narrow a peripheral dimension as can conveniently be provided. Typically they may extend over a radial distance of 0.5 to 5 times the depth of the slot, although the plates can extend over a longer radial distance if desired. They may be arranged substantially in the radial direction or part or all of the length of the plates may be at an angle to the radial direction so as to modify the tangential component of the melt flow as it is thrown out of the slot. For instance the plates may be thin and extend at an angle of 10 to 70°, often 20 to 45°, to the radial direction over part or all of their length.

Instead of or in addition to being provided to deflect the direction of flow of the melt, the plates or other baffles may be provided to resist the flow of melt out through the slot. For this purpose, they need a significant peripheral dimension. Thick plates which extend substantially radially may provide this, but more usually thick pins or thin plates extending substantially peripherally are provided. These peripherally extending baffles provide resistance to flow of the melt out through the slot. This is particularly desirable when the melt has a lower viscosity than may be optimum for fibre formation in the absence of the baffles. Thus, the provision of the baffles means that it is not necessary to control the melt temperature, and therefore the viscosity, as critically as might otherwise be necessary.

Irrespective of the effectiveness of the fiberisation baffles, optimum fibre formation generally requires that the melt should be intercepted, and usually attenuated, by an air jet as it emerges from the slot.

It is therefore preferred to provide at least one substantially peripheral nozzle for ejecting a jet of air into the melt as it is thrown out of the outlet slot.

One or more peripheral nozzles can be provided from fixed rings located above and often slightly radially out from the slot, but generally the nozzle, or at least one of the nozzles, spins with the disc. Thus the apparatus preferably comprises also an air supply passage which may extend around the annular melt passage and above the disc melt passage and which leads to a downwardly inclined outlet nozzle extending around the disc. Air may therefore be forced down the passage and out through the outlet nozzle for ejecting a jet of air into the melt as it is thrown out of the outlet slot.

It is generally necessary for the air jet to have some downward inclination so as to provide optimum effect on the melt which is being thrown out of the slot. The downward inclination may be very small and may be created by substantially parallel flows of air and melt being drawn together, but preferably the air jet is positioned so as to deflect the main flow of air downwardly by an angle of at least 20°, often around 30 to 60°. This ensures good interaction between the air and the melt which is being thrown from the outlet slot. The air may be preheated and/or may contain a hydrocarbon gas for combustion so as to decrease the rate of cooling of the melt when the air interacts with the melt. Generally, however, it is satisfactory for the air to provide cooling in the apparatus and/or to the melt as it is thrown out of the outlet slot. Thus for instance passing air down an air supply passage which extends around the annular melt passage will provide cooling of the apparatus, as will cooling air passing through an air supply passage above (or below) the disc melt passage. The cooling effect can be promoted by entraining water droplets in the air, so that these evaporate as they pass through the air supply passage (thereby cooling the apparatus) and/or as they emerge from the jet (thereby cooling the atmosphere into which the fibres are being formed).

Because of the very high melt temperatures in the apparatus (often 900 to 1500°C), it is necessary to cool the apparatus during use and this cooling is provided, at least in part, by passing a coolant down the shaft coolant passage which is surrounded by the annular melt passage. This coolant may simply be discharged out of the bottom of the apparatus but generally the coaxial coolant passage leads into a disc coolant passage which extends beneath the lower wall of the disc melt passage and discharges coolant from a peripheral coolant outlet slot beneath the melt outlet slot.

Usually the shaft coolant passage is in contact with the inner wall of the annular melt passage and usually the disc coolant passage is in contact with the lower wall of the disc melt passage. As a result of having the coolant passages substantially coextensive with the annular melt passage through the sahft, and the disc melt passage through the disc, the coolant is able to cool the surfaces on these passages over their entire area. The coolant is typically water but any other inert coolant fluid can be used.

The coolant emerging from the coolant outlet slot can contribute to fibre formation but usually it is positioned radially inwards from the melt outlet slot so as to reduce the potential interaction of the coolant on the fibres as they are being formed. The cooling of the fibres by the coolant and/or by the air jet is desirable so as to reduce the temperature of the fibres before binder is applied to them.

An essential feature of the invention is that the melt is heated by electrical conductive heating as it flows through the annular melt passage and through the disc melt passage. The electrical conductive heating is provided by making part or all of the opposed walls of the annular passage and part or all of the opposed walls of the disc melt passage electrically conducting, and by passing a current through the melt between the opposed walls. Naturally it is necessary that the baffles or other elements should not make a low-resistance electrical connection between the opposed walls as otherwise this would prevent the conductive heating created by passing a current through the melt between the conductive walls.

The conductive walls may be provided with conductive elements covering parts only of the relevant walls, or may be provided with an electrically conductive lining covering most or all of the opposed walls, or the walls may themselves be formed from an electrically conductive material which is sufficiently structurally strong to serve as the walls of the annular and/or disc passages. The preferred apparatus has walls formed of steel or other structurally strong material with an electrically conductive lining, on the melt side of each wall, of a carbide, nitride, or oxide or other material which is electrically conductive and stable in contact with the melt. Examples are grapite and silicon carbide. The baffles are preferably of platinum. The design of the disc passage and the baffles is preferably such that the heating at the outlet is optimised for fibre formation.

The invention includes methods of making mineral fibres using the apparatus and the products made by the method. The invention can be used for forming fibres from any suitable melt. The melt usually has a melting temperature between 1,000 and 1500°C. It can be a melt of the type conventionally used for forming what are normally referred to as glass fibres, or it can be a melt of the type used for forming what are normally referred to as rock, slag or stone fibres.

The invention is illustrated in the accompanying drawings in which
Figure 1 is a cross section of the lower part of an apparatus according to the invention and
Figure 2 is a similar, but enlarged, cross section of the upper part.

The spinning apparatus comprises a substantially vertical shaft shown generally as 1 mounted for rotation about its vertical axis, and a substantially horizontal disc shown generally as 2, which merges with the shaft at the base of the shaft and which therefore rotates with the shaft.

There is an annular melt passage 3 defined by inner and outer opposed annular walls 4 and 5, and which extends coaxially through the shaft. The walls 4 and 5 may be made of steel or other structurally strong material. The inner annular wall 4 is lined, on its outer face, by a layer 6 of graphite or other electrically conductive material. The outer wall 5 is lined on its inner face by a layer 7 of similar electrically conductive graphite or other material.

The inner wall 4 defines the outer wall of a central coolant tube 8.

The annular melt passage 3 leads into a disc shaped melt passage 9 which extends outwardly towards a melt outlet 10. This melt outlet is arranged at the periphery of the disc 2. The disc melt passage 9 is defined by a lower steel or other structural wall 11 and an upper steel or other structural wall 12, both of these being disc shaped. The upper surface of the wall 11 and the lower surface of the wall 12 are each lined with electrically conductive material 6 and 7 respectively.

The shaft coolant passage 8 leads down into a disc shaped coolant passage 27 that extends outwardly from the shaft passage 8 and terminates in an outlet 13 radially inward of the melt outlet 10.

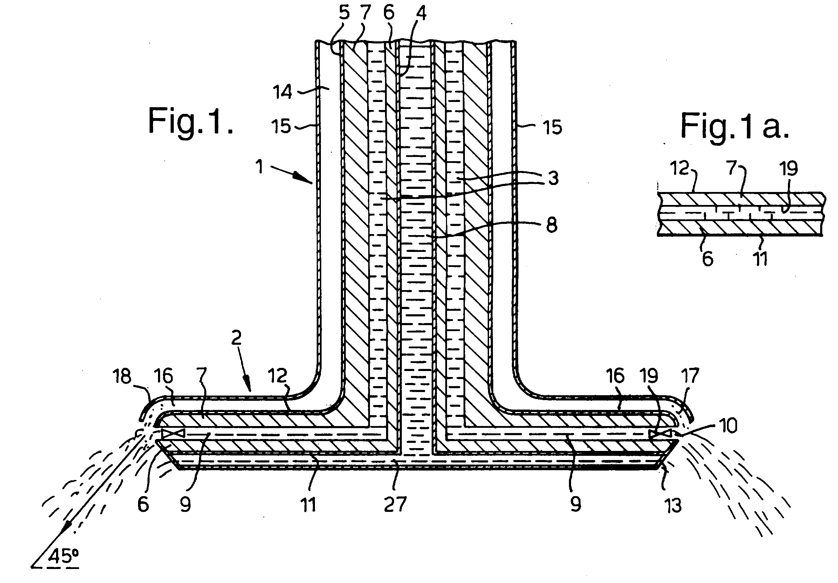

An annular air supply passage 14 defined internally by the wall 5 and externally by an outer steel or other structural wall 15 surrounds the shaft 1 and leads into an air supply passage 16 which is disc shaped and which leads over the upper wall 12 of the disc 2. This disc air supply passage 16 terminates in a jet outlet 17. As shown, the purpose of the jet outlet 17 is to eject the air from the passage 16 downwardly at an angle which, in Figure 1, is shown as being at around 45° to the horizontal. The desired angle is controlled by the rate of flow through the passage 16 and the configuration of the outer wall 18 of the passage adjacent the outlet 17.

Radially extending blades 19 are positioned in the disc melt passage 9 adjacent the outlet 10. As shown in Figure 1a (which is an edge view of the passage 10) these blades 19 are arranged to extend alternately from the upper and lower walls, through the graphite or other electrically conducting layer.

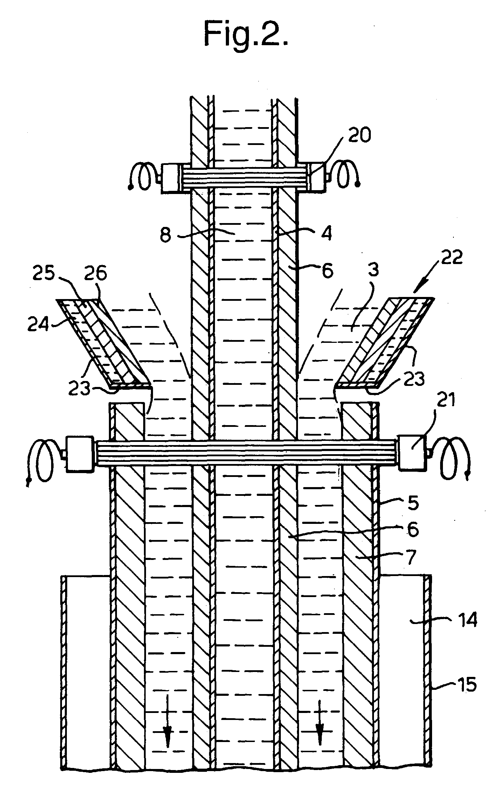

An electric current is passed through the melt in the melt passages 3 and 9 as a result of electrical connections 20 (to the inner graphite lining 6) and 21 (to the outer graphite lining 7) as shown in Figure 2. Melt is fed into the annular melt channel 3 through a melt funnel 22, and generally it is desirable for this funnel to include a filter or other means for ensuring the homogeneity of the melt. The funnel may be formed of an outer steel casing 23 which encloses a passsage 24 which is cooled by water, a stone lining 25 and graphite or other electrically conductive layer 26 electrically connected, by means not shown, to the connector 21.

Water or other coolant is pumped down the passage 8 and out through the passage 12. Air, often containing entrained water droplets, is pumped down through the passages 14 and 16.

The diameter of the disc at the position of the outlet 10 typically is from 30 to 50cm. The width of the shaft melt channel 3 and the height of the disc melt channel 9 typically is from 5 to 20mm. The horizontal and vertical spacing between the closest adjacent points of the blades 19 shown in Figure 1a is generally between 1 and 3mm. The height of the melt outlet 10 may be the same as the height of the melt channel 9 or may be reduced, for instance being 30 to 80% of the depth of the channel 9.

In a typical example, the apparatus is rotated in conventional manner at speeds in the range 3000 to 5000rpm.

Suitable melts for use are described in WO92/12940 and WO96/14274.

The coolant 8 typically can be water and the air stream passing through the passages 14 and 16 typically is air containing entrained moisture droplets. The air velocity through the jet 17 is typically in the range 100-200m/s.

## Claims

1. A spinning apparatus for forming mineral fibres comprising a substantially vertical shaft (1) mounted for rotation about its axis and a substantially horizontal disc (2) mounted at the base of the shaft (1) for rotation with the shaft, characterised in that
an annular melt passage (3) defined by inner and outer opposed walls (4, 5) extends coaxially through the shaft (1) around a shaft coolant passage (8) into a disc melt passage (9) which is defined by upper and lower opposed walls (12, 11) and extends from the annular melt passage (3) to a peripheral melt outlet slot (10) whereby melt fed down into the annular melt passage (3) can be thrown centrifugally from the outlet slot (10),
fiberisation baffles (19) in the disc melt passage (9) in or adjacent to the outlet slot (10) and
means (20, 21) for applying electrically conductive heating to the melt between the inner and outer opposed walls (4, 5) and between the upper and lower opposed walls (12, 11).

2. Apparatus according to claim 1 in which the fiberisation baffles comprise pins or substantially radially extending blades or substantially peripherally extending members which extend from one or each of the upper and lower walls partially towards the other.

3. Apparatus according to claim 1 in which the baffles comprise pins or plates extending alternately from the upper and lower walls towards the other.

4. Apparatus according to any preceding claim additionally comprising an air supply passage extending round the annular melt passage and above the disc melt passage and leading to a downwardly inclined outlet nozzle extending around the disc for ejecting a jet into the melt which is being thrown out of the outlet slot.

5. Apparatus according to any preceding claim additionally comprising a disc coolant passage which leads from the shaft coolant passage and extends beneath the lower wall of the disc melt passage and discharges coolant from a peripheral coolant outlet slot beneath the melt outlet slot.

6. Apparatus according to any preceding claim in which the coolant outlet slot is positioned radially inwards of the melt outlet slot.

7. A process of making mineral fibres using apparatus according to any preceding claim comprising spinning the apparatus about its substantially vertical axis, passing coolant down the coolant passage, passing melt down the melt passages and out through the outlet slot (10) and thereby fiberising it, and heating the melt as it passes through the melt passages by electrical conductive heating.
